## Europäisches Patentamt

## European Patent Office

## Office européen des brevets

(19)

(11) Veröffentlichungsnummer: **0 205 859**
**B1**

(12) **EUROPÄISCHE PATENTSCHRIFT**

(45) Veröffentlichungstag der Patentschrift:
16.08.89

(51) Int. Cl.⁴: **B 23 K  20/24,** B 23 K  20/22,
B 23 K  20/14

(21) Anmeldenummer: **86106323.8**

(22) Anmeldetag: **09.05.86**

(54) **Verfahren zum Verbinden von Bauteilen aus einer dispersionsgehärteten Superlegierung nach der Methode des Pressfügens.**

(30) Priorität: **11.06.85  CH 2456/85**

(43) Veröffentlichungstag der Anmeldung:
30.12.86 Patentblatt 86/52

(45) Bekanntmachung des Hinweises auf die Patenterteilung:
16.08.89 Patentblatt 89/33

(84) Benannte Vertragsstaaten:
**CH DE FR GB LI SE**

(56) Entgegenhaltungen:
**DE-B- 2 732 778**
**US-A- 3 552 898**
**US-A- 3 758 741**
**US-A- 3 798 748**

**M.M. SCHWARTZ: "Metals joining manual", 1979, Seiten 10-1-10-69, Kapitel 10, McGraw-Hill Book Co., New York, US; M.M. SCHWARTZ: "Diffusion welding" POWDER METALLURGY OF SUPERALLOYS, Kapitel 8.2, 1984, Seiten 306-312, London, GB;**

(73) Patentinhaber: **BBC Brown Boveri AG, Haselstrasse, CH-5401 Baden (CH)**

(72) Erfinder: **Rydstad, Hans, Dr., Bollstrasse 28, CH-5413 Birmenstorf (CH)**
Erfinder: **Singer, Robert, Dr., Höhenweg 35C, CH-5417 Untersiggenthal (CH)**

# Beschreibung

Die Erfindung geht aus von einem Verfahren zum Verbinden von Bauteilen aus einer dispersionsgehärteten Superlegierung nach der Gattung des Oberbegriffs des Anspruchs 1.

Komplizierte, insbesondere konkave und hohle Formen aufweisende Werkstücke aus oxyddispersionsgehärteten Superlegierungen (Gasturbinenschaufeln) müssen oft aus einzelnen Teilen angefertigt und letztere durch ein geeignetes Fügeverfahren zu einem Ganzen verbunden werden. Derartige Verfahren zum Verbinden von Bauteilen sind bekannt (vgl. z.B. G.H. Gessinger, Powder Metallurgy of Superalloys, Butterworths 1984, Kapitel 8.2.1 Diffusion bonding, Seiten 306 bis 312). Im allgemeinen werden an die zu verbindenden Oberflächen ausserordentlich hohe Anforderungen an Genauigkeit und Oberflächengüte gestellt, welche nur durch Feinstschleifen, Elektropolieren etc. erreicht werden können: vgl. M.M. Schwartz, Metal Joining Manual, 1979 N.Y., Kapitel 10 Diffusion welding, insbesondere Abschnitt «Surface preparation», Seiten 10-7 bis 10-9. Dies gilt auch für Verfahren, bei denen die Bauteile im nichtrekristallisierten Zustand gefügt werden, wobei durch eine nachträgliche Grobkornglühung die Rekristallisationsfront über die Fügezone läuft (z.B. US-A-3 798 748).

Aus dem Vorstehenden geht klar hervor, dass die herkömmlichen Fügeverfahren wie Diffusionsfügen, Press-Schweissen etc. an eine sehr aufwendige und kostspielige Oberflächenvorbereitung der zu fügenden Flächen gebunden sind. Es besteht daher ein grosses Bedürfnis nach einer wirksamen Kostensenkung und Vereinfachung auf diesem Gebiet.

Der Erfindung liegt die Aufgabe zugrunde, ein Verfahren zum Verbinden von Bauteilen aus einer oxyddispersionsgehärteten Superlegierung unter Zuhilfenahme der Methode des Pressfügens anzugeben, welche die aufwendige Vorbereitung der Bauteile, insbesondere die langwierige Feinstbearbeitung und Behandlung der zu fügenden Oberflächen vermeidet und zu reproduzierbaren, kostengünstigen, in der Massenproduktion wirtschaftlich einsetzbaren Ergebnissen führt.

Diese Aufgabe wird durch die im kennzeichnenden Teil des Anspruchs 1 angegebenen Merkmale gelöst.

Die Erfindung wird anhand des nachfolgenden, durch eine Figur näher erläuterten Ausführungsbeispiels beschrieben.

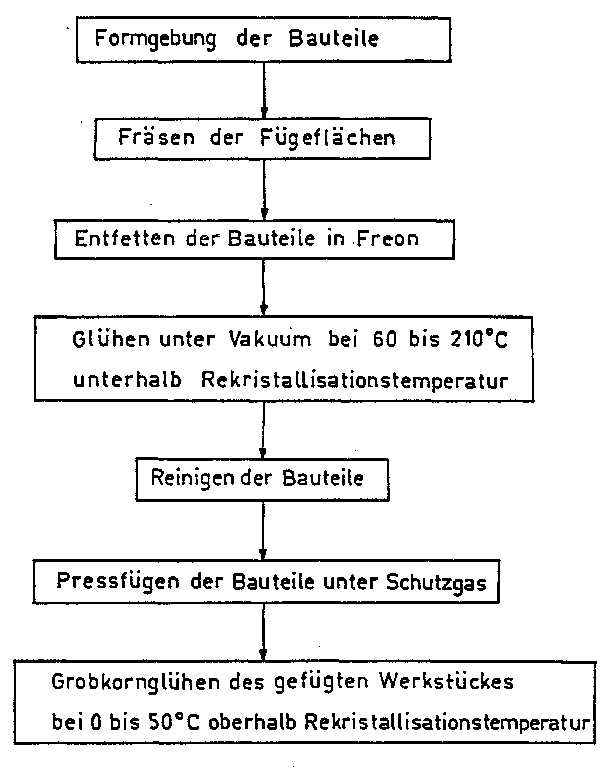

Dabei zeigt die Figur ein Fliessdiagramm des Verfahrens in Blockdarstellung. Die Figur bedarf keiner weiteren Erläuterung.

## Ausführungsbeispiel

Es wurden zwei gleiche zylindrische Probekörper nach dem Verfahren des Pressfügens stirnseitig miteinander verbunden.

Die Probekörper hatten folgende Abmessungen:

Durchmesser = 15 mm
Höhe = 24 mm

Als Werkstoff wurde eine oxyddispersionsgehärtete Nickelbasis-Superlegierung mit der Handelsbezeichnung MA 6000 (INCO) im feinkörnigen, nicht rekristalliserten Zustand verwendet. Die Legierung hatte die nachfolgende Zusammensetzung:

| Ni | $\approx$ | 69 | Gew.-% |
|----|---|------|--------|
| Cr | = | 15 | Gew.-% |
| W | = | 4,0 | Gew.-% |
| Mo | = | 2,0 | Gew.-% |
| Al | = | 4,5 | Gew.-% |
| Ti | = | 2,5 | Gew.-% |
| Ta | = | 2,0 | Gew.-% |
| C | = | 0,05 | Gew.-% |
| B | = | 0,01 | Gew.-% |
| Zr | = | 0,15 | Gew.-% |
| $Y_2O_3$ | = | 1,1 | Gew.-% |

Die zu fügenden Stirnflächen der Probekörper wurden lediglich mittels Hartmetallfräser sauber mechanisch bearbeitet. Kein Schleifen oder Elektropolieren! Nach der mechanischen Bearbeitung wurden die Probekörper in Freon entfettet. Daraufhin wurden sie in einem Vakuumofen während 10 min bei einer Temperatur von 1050°C geglüht.

Durch diese Wärmebehandlung wurde der durch die mechanische Bearbeitung zuvor in der Oberflächenzone erzeugte Überschuss an Triebkraft, welcher beim nachträglichen Fügen und Glühen zu einer feinkörnig rekristallisierenden Fügezone führen würde, wieder abgebaut. Nach der Glühbehandlung bei 1050°C wurden die Probekörper gereinigt und unter Schutzgasatmosphäre auf eine Fügetemperatur von 980°C gebracht. Das Fügen erfolgte unter Druck in einem aus Gesenkoberteil und Gesenkunterteil bestehenden beheizten Werkzeug in einer Presse. Nach dem Fügen wurde das Werkstück einer zur Grobkornbildung (Rekristallisation) dienenden Wärmebehandlung während 1 h bei einer Temperatur von 1200°C unterzogen und schliesslich in Luft abgekühlt. Die Prüfung ergab kein Nachlassen der Festigkeitswerte gegenüber dem ungefügten Werkstoff. Am Werkstück konnte metallographisch keine Feinkornbildung in der Fügezone festgestellt werden. Eine Nahtstelle war lichtmikroskopisch nicht erkennbar.

Das Verfahren ist nicht auf das Ausführungsbeispiel beschränkt. Es können auch Bauteile aus anderen Werkstoffen als MA 6000 nach diesem Verfahren in wirtschaftlicher Weise gefügt werden. Die Wärmebehandlung vor dem Fügen zwecks Herabsetzung der Triebkraft wird im Temperaturbereich von 60°C bis 150°C unterhalb der Rekristallisationstemperatur des Werkstoffs durchgeführt. Die Glühzeiten betragen in der Regel 4 bis 80 min, wobei sie um so länger ausfallen, je tiefer die Glühtemperatur ist.

## Patentansprüche

1. Verfahren zum Verbinden von Bauteilen aus einer dispersionsgehärteten Superlegierung nach der Methode des Pressfügens, wobei die Bauteile gereinigt, deren Fügeflächen mechanisch bearbeitet und unter Schutzgasatmosphäre bei einer unterhalb der Rekristallisationstemperatur liegenden Temperatur aufeinandergepresst werden und das fertig gefügte Werkstück daraufhin einer Grobkornglühung oberhalb der Rekristallisationstemperatur unterworfen wird, dadurch gekennzeichnet, dass die Bauteile unter Verzicht auf eine Feinstbearbeitung ihrer Fügeflächen lediglich einer mechanischen Bearbeitung durch konventionelles Fräsen, Drehen oder Schleifen unterzogen werden und vor dem Fügen einer zusätzlichen Vorglühung zwecks Abbau überschüssiger Triebkraft im Temperaturbereich von 60°C bis 210°C unterhalb der Rekristallisationstemperatur ausgesetzt werden.

2. Verfahren nach Anspruch 1, dadurch gekennzeichnet, dass der Werkstoff die nachfolgende Zusammensetzung aufweist

| Ni    | ≈ | 69    | Gew.-% |
|-------|---|-------|--------|
| Cr    | = | 15    | Gew.-% |
| W     | = | 4,0   | Gew.-% |
| Mo    | = | 2,0   | Gew.-% |
| Al    | = | 4,5   | Gew.-% |
| Ti    | = | 2,5   | Gew.-% |
| Ta    | = | 2,0   | Gew.-% |
| C     | = | 0,05  | Gew.-% |
| B     | = | 0,01  | Gew.-% |
| Zr    | = | 0,15  | Gew.-% |
| $Y_2O_3$ | = | 1,1  | Gew.-% |

und dass die Vorglühung vor dem Pressfügen im Temperaturbereich zwischen 1050 und 1060°C während 10 min durchgeführt wird.

## Claims

1. Process for connecting components made of a dispersion-hardened superalloy using the pressure-bonding method, wherein the components are cleaned, have their joint surfaces machined and are pressed together under an inert gas atmosphere at a temperature below the recrystallisation temperature and the completely bonded workpiece is then subjected to coarse-grain heat treatment above the recrystallisation temperature, characterised in that the components, fine machining of their joint surfaces being omitted, are only subjected to machining by conventional milling, turning or grinding and are exposed, before bonding, to an additional preliminary heat treatment in the temperature range between 60°C and 210°C below the recrystallisation temperature for the purpose of reducing excess driving force.

2. Method according to Claim 1, characterised in that the material has the following composition

| Ni | ≈ | 69 | % by weight |
|----|---|----|-------------|
| Cr | = | 15 | % by weight |
| W  | = | 4.0 | % by weight |
| Mo | = | 2.0 | % by weight |
| Al | = | 4.5 | % by weight |
| Ti | = | 2.5 | % by weight |
| Ta | = | 2.0 | % by weight |
| C  | = | 0.05 | % by weight |
| B  | = | 0.01 | % by weight |
| Zr | = | 0.15 | % by weight |
| $Y_2O_3$ | = | 1.1 | % by weight |

and that the preliminary heat treatment before the pressure bonding is carried out in the temperature range between 1050 and 1060°C for 10 minutes.

## Revendications

1. Procédé pour joindre des éléments de construction constitués d'un superalliage durci par dispersion au moyen de la méthode de l'assemblage à la presse, dans lequel les éléments de construction sont nettoyés, leurs faces à assembler sont usinées mécaniquement et pressées l'une contre l'autre sous une atmosphère de gaz protecteur à une température inférieure à la température de recristallisation et où la pièce assemblée terminée est ensuite soumise à un recuit de grossissement du grain au-dessus de la température de recristallisation, caractérisé en ce que, renonçant à un usinage très fin de leurs surfaces de jonction, les éléments de construction sont soumis simplement à un usinage mécanique par fraisage, tournage ou meulage conventionnel et sont, avant l'assemblage, soumis à un prérecuit supplémentaire dans un domaine de température situé entre 60°C et 210°C sous la température de recristallisation, afin d'éliminer l'excédent de force motrice.

2. Procédé suivant la revendication 1, caractérisé en ce que le matériau présente la composition pondérale suivante:

| Ni | ≈ | 69 | % |
|----|---|----|---|
| Cr | = | 15 | % |
| W  | = | 4,0 | % |
| Mo | = | 2,0 | % |
| Al | = | 4,5 | % |
| Ti | = | 2,5 | % |
| Ta | = | 2,0 | % |
| C  | = | 0,05 | % |
| B  | = | 0,01 | % |
| Zr | = | 0,15 | % |
| $Y_2O_3$ | = | 1,1 | % |

et en ce que le prérecuit préalable à l'assemblage à la presse est effectué pendant 10 min dans un domaine de température compris entre 1050 et 1060°C.

| Formgebung der Bauteile |
| --- |

↓

| Fräsen der Fügeflächen |
| --- |

↓

| Entfetten der Bauteile in Freon |
| --- |

↓

| Glühen unter Vakuum bei 60 bis 210°C unterhalb Rekristallisationstemperatur |
| --- |

↓

| Reinigen der Bauteile |
| --- |

↓

| Pressfügen der Bauteile unter Schutzgas |
| --- |

↓

| Grobkornglühen des gefügten Werkstückes bei 0 bis 50°C oberhalb Rekristallisationstemperatur |
| --- |